# DEMANDE DE BREVET EUROPEEN

(11) **EP 2 555 491 A1**
(43) Date de publication de la demande: **06.02.2013**
(21) Numéro de dépôt: 12179158.6
(22) Date de dépôt: 03.08.2012
(51) Int. Cl.: H04L 29/08, E04H 4/00, H04L 12/28

(54) **Gestion de l'affichage d'un système de gestion**

(30) Priorité: 05.08.2011 FR 1157190
(71) Demandeur: Klereo, 78360 Montesson (FR)
(72) Inventeur: Dousset, Laurent, 95810 Grisy-les-Platres (FR)
(74) Mandataire: Novaimo

(57) **Abrégé**

Procédé de communication de données, notamment de données d'un système de gestion d'une piscine ou d'un système de gestion d'un réseau domotique, caractérisé en ce qu'il comprend les étapes suivantes :
- (E1) : collecte de données à afficher par un module de communication (8) ;
- (E2) : formatage des données à afficher ;
- (E3) : transfert des données formatées vers un afficheur (20).

## Description

L'invention concerne un procédé de communication de données, particulièrement adapté pour la présentation des données d'un système de gestion, notamment d'un système de gestion d'une piscine. Elle concerne aussi un système de gestion d'une piscine ou d'un réseau domotique et plus généralement un système de communication ou d'affichage.

Le document W02011004015 décrit un système de gestion d'une piscine selon l'état de la technique, qui comprend essentiellement un dispositif de contrôle local de la piscine comprenant des capteurs qui mesurent certaines grandeurs représentant la qualité de l'eau, comme par exemple son pH, sa teneur en Chlore ou sel, sa température. Ces capteurs communiquent avec une unité centrale qui comprend des moyens matériels et/ou logiciels, comprenant par exemple un microcontrôleur, pour mettre en oeuvre une régulation des grandeurs de qualité de l'eau pour les maintenir dans des plages prédéfinies. Pour cela, l'unité centrale contrôle des actionneurs, pompes et autres moyens mécaniques pour engager des actions consistant par exemple en une recirculation de l'eau au travers d'un filtre, ou en une injection de produits de traitement de type acide, chlore, brome, ozone, oxygène actif ou en production d'UV, de désinfectant par électrolyse comme par exemple une production de chlore par électrolyse au sel. L'unité centrale comprend de plus son écran dédié, sur lequel sont affichées des données de la gestion de la piscine par une interface homme machine sommaire. L'écran représente donc un composant périphérique spécifique de l'unité centrale. Dans la pratique, l'écran choisi et l'interface homme machine implémentée, qui sont spécifiquement développés à l'application de gestion de piscine, sont peu performants pour minimiser les coûts. Il en ressort une solution peu conviviale.

Il existe donc un besoin d'amélioration de l'interface de communication d'un système de gestion d'une piscine ou d'un réseau domotique, pour ses utilisateurs et/ou gestionnaires, et plus généralement de tout système informatique. En particulier, il existe un besoin pour afficher un ensemble de données sous une forme pratique et exportable, sans que cela ne nécessite de disposer d'un afficheur avec des moyens logiciels d'affichage spécifiques à chaque système de gestion.

L'objet général de l'invention répond au besoin précédent.

A cet effet, l'invention repose sur un procédé de communication de données, notamment de données d'un système de gestion d'une piscine ou d'un système de gestion d'un réseau domotique, **caractérisé en ce qu'**il comprend les étapes suivantes :
- collecte de données à afficher par un module de communication ;
- formatage des données à afficher consistant à créer au moins un fichier de type image statique, ou vidéo, ou un fichier sonore, dans un format universel, contenant les données à afficher ;
- transfert des données formatées vers un afficheur.

La seconde étape de formatage des données à afficher peut consister à organiser les données sous la forme de plusieurs fichiers de données, selon une organisation de type clé USB.

L'invention porte aussi sur un système de gestion, notamment d'une piscine ou d'un réseau domotique **caractérisé en ce qu'**il comprend un module de communication comprenant un calculateur pour formater des données à afficher et une connectique de type USB, ce module de communication mettant en oeuvre le procédé de communication tel que décrit précédemment.

L'invention porte aussi sur un système de communication comprenant au moins un afficheur équipé d'un port d'entrée USB pour recevoir des données à afficher, **caractérisé en ce qu'**il comprend un système de gestion tel que décrit précédemment.

L'invention est plus précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement un système de gestion de piscine selon un mode de réalisation de l'invention.

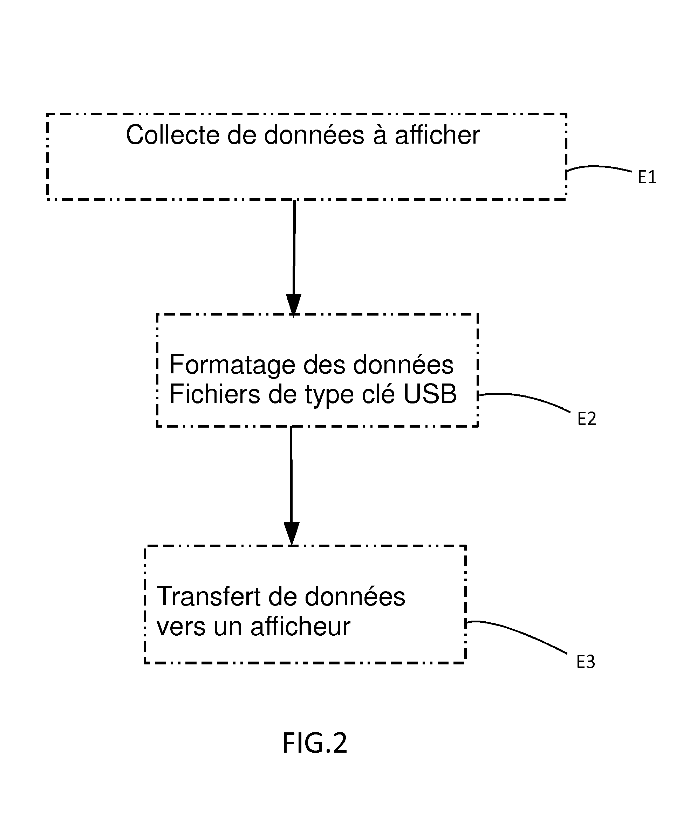

La figure 2 représente schématiquement un procédé de communication de données selon un mode de réalisation de l'invention.

Le mode de réalisation de l'invention va être décrit dans le cadre de la gestion d'une piscine. Toutefois, comme nous le verrons ultérieurement, le principe de communication de ce système de gestion de piscine peut aussi convenir à de nombreux autres systèmes nécessitant la communication de données.

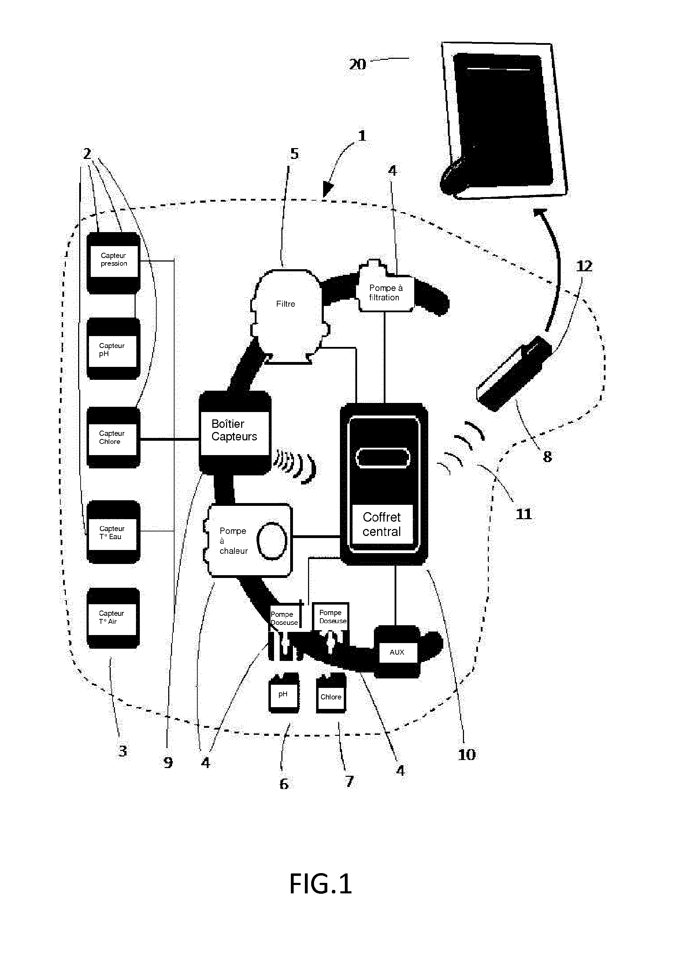

Le système de gestion 1 d'une piscine, représenté schématiquement sur la figure 1, a pour fonction de garantir la qualité de l'eau de la piscine en fonction de l'utilisation souhaitée, tout en optimisant les consommations énergétiques, en électricité, gaz, ou toute autre source d'énergie, en eau et en tout autre produit d'entretien.

Pour cela, il comprend des capteurs ou sondes 2 qui mesurent certaines grandeurs représentant la qualité de l'eau, comme par exemple son pH, sa teneur en Chlore ou sel, sa température, voire des capteurs 3 mesurant des grandeurs de l'environnement extérieur, comme la température de l'air. Ces sondes 2, 3 communiquent avec une unité centrale 10, éventuellement par l'intermédiaire d'un boitier intermédiaire 9 doté d'un moyen de communication sans fil avec l'unité centrale 10, qui comprend des moyens matériels et/ou logiciels, comprenant par exemple un microcontrôleur ou un ordinateur, pour mettre en oeuvre une régulation des grandeurs de qualité de l'eau. Pour cela, l'unité centrale 10 contrôle des actionneurs, pompes 4 et autres moyens mécaniques pour engager des actions consistant par exemple en une recirculation de l'eau au travers d'un filtre 5, ou en l'injection de produits de traitement de type acide 6, chlore 7, brome, ozone, oxygène actif ou en production d'UV, de désinfectant par électrolyse comme par exemple une production de chlore par électrolyse au sel. Par ce biais, chaque unité centrale 10 peut maintenir automatiquement la qualité de l'eau à un niveau choisi avec une consommation optimisée. Le principe décrit ci-dessus illustre le fonctionnement normal du système de gestion d'une piscine, de manière automatique ou semi-automatique, selon toute solution de régulation.

Le système de gestion de la piscine permet une interaction avec un utilisateur, qui peut se faire par l'intermédiaire d'une simple télécommande, non représentée, qui communique de manière avantageuse par un moyen de communication sans fil avec l'unité centrale 10, ce qui permet de la disposer aux abords immédiats de la piscine, alors que l'unité centrale 10 se trouve dans un local annexe fermé.

La présente invention s'intéresse particulièrement à la communication de ce système de gestion avec ses utilisateurs et/ou avec le gestionnaire du système. Un premier principe mis en oeuvre consiste à permettre cette communication par l'intermédiaire d'un dispositif de communication non spécifiquement dédié au système de gestion de piscine, que nous appellerons plus simplement afficheur par la suite, qui peut être un téléviseur, un cadre d'affichage numérique de photos, un téléphone portable ou PDA, une tablette numérique, un boîtier ADSL, une console de jeux, portable ou non, etc. Ce principe présente l'avantage de permettre un libre choix du support d'affichage, sans être restreint au seul dispositif d'affichage du système de gestion. Il rend de plus le système plus convivial puisqu'il utilise un afficheur par nature convivial. En remarque, nous entendons par afficheur tout dispositif au sens large adapté pour présenter des données de toute nature, par exemple par une représentation visuelle sur un écran et/ou de manière sonore par un haut-parleur.

Un second principe mis en oeuvre par le système de gestion de la piscine consiste en une étape de formatage des données, en particulier d'un formatage sous forme d'un ou plusieurs fichiers dans un standard universel. Plusieurs fichiers peuvent être organisés de manière à pouvoir être lus ou stockés de manière similaire à l'organisation de fichiers mise en oeuvre sur une clé USB standard. Ensuite, ce système de gestion de la piscine comprend un dispositif de communication selon le standard utilisé par les clés USB, à l'aide d'un connecteur d'entrée et/ou de sortie de type de celui d'une clé USB.

Ces caractéristiques du système de gestion de la piscine lui permettent de pouvoir être relié à un afficheur 20 par l'intermédiaire d'un port USB, puis d'être reconnu et géré par cet afficheur comme s'il était une simple clé USB comprenant des fichiers à afficher. Cet afficheur n'est donc pas considéré et géré par le système comme un de ses périphériques d'affichage. Cette solution présente l'avantage de rendre compatible la présentation de données du système de gestion de la piscine avec un grand nombre d'afficheurs standard existants, pour mettre en oeuvre la présentation conviviale des données choisies concernant une piscine, sans nécessiter de développements logiciel et/ou matériel coûteux.

Ainsi, selon le mode de réalisation de l'invention, le système de gestion de la piscine comprend un module de communication 8, par exemple intégré à l'unité centrale 10, au boîtier intermédiaire 9, ou à la télécommande du système de gestion de la piscine, voire dans tout autre composant de ce système.

Le module de communication reçoit et collecte un certain nombre de données à afficher, par exemple en utilisant le réseau de communication sans fil du système de gestion.

Ainsi le module de communication collecte des données à afficher, de préférence transmises depuis l'unité centrale 10 du système de gestion de la piscine par une liaison radio 11, et qui peuvent par exemple être des données caractéristiques de la qualité de l'eau de la piscine. Ensuite, le module de communication 8 comprend un calculateur de type microcontrôleur, qui met en oeuvre le formatage des données reçues, tel qu'explicité précédemment, par exemple en utilisant ces données pour la création d'un fichier informatique sous un format universel, comme par exemple un format .jpg, .bmp, ou .pdf. Enfin, le module de communication 8 comprend un port de communication 12 de type USB qui permet sa liaison directe ou indirecte avec un afficheur 20 et la présentation des données à afficher par ce dernier, par l'affichage du fichier informatique. Alternativement, le formatage des données peut être réalisé par un autre élément de mise en forme, extérieur au module de communication. Dans ce cas, le module de communication collecte les données à afficher, et les transmet à l'élément de mise en forme.

Le module de communication 8 peut également être choisi comme un élément distinct pour permettre son transport facile et sa connexion conviviale avec différents afficheurs, à la manière d'une clé USB. De plus, la communication des données à afficher peut être transmise au module de communication 8 par tout autre moyen de communication, avec ou sans contact, par l'intermédiaire d'une liaison filaire, Bluetooth, RFID, infrarouge par exemple. En variante, la transmission des données à afficher peut être mise en oeuvre par d'autres composants du système de gestion 1 de la piscine, par exemple par l'intermédiaire du boîtier intermédiaire 9.

L'invention porte aussi sur un procédé de communication d'un système de gestion d'une piscine ou d'un réseau domotique décrit précédemment, qui lui permet de communiquer des données à un utilisateur par l'intermédiaire d'un afficheur externe standard par une liaison par un simple port USB. Pour cela, le procédé de communication comprend les étapes suivantes :
- une première étape E1 de collecte de données à afficher par un module de communication 8;
- une seconde étape E2 de formatage des données à afficher;
- une troisième étape E3 de transfert des données formatées à un afficheur pour leur présentation sur l'afficheur.

La première étape E1 comprend la sélection des données à afficher, qui peuvent être des simples mesures réalisées par les capteurs 2, 3 du système de gestion de la piscine, des paramètres de réglage du système de gestion ou des données calculées par le système. Selon un mode de réalisation, les données à afficher peuvent être tout ou partie des données suivantes :
- un identifiant de la piscine ;
- la mesure de la température de l'eau et/ou de l'air ;
- la mesure du pH de l'eau ;
- la mesure du potentiel RedOx ;
- la mesure du Chlore ou produit équivalent, dont la fonction est le traitement de l'eau ;
- des valeurs de consignes et/ou valeurs maximales et/ou valeurs minimales de grandeurs représentant la qualité de l'eau comme le pH, le chlore ou sel ou brome ou ozone ou oxygène actif ou niveau de production d'UV, de désinfectant par électrolyse (exemple : production de chlore par électrolyse au sel), du système de gestion de la piscine ;
- les valeurs de plages horaires de ces valeurs de consigne et/ou valeurs maximales et/ou valeurs minimales de grandeurs représentant la qualité de l'eau ;
- les plages de filtration de l'eau de la piscine du système de gestion de la piscine ;
- les ajouts de produits traitants dans l'eau de la piscine ou dans un réservoir adapté ;
- le mode de fonctionnement du système de gestion de la piscine, parmi par exemple un premier mode d'hivernage, dans lequel les paramètres de fonctionnement des actionneurs sont très largement limités, certains actionneurs pouvant être totalement désactivés, un deuxième mode de traitement réduit, ou mode d'usage économique, dans lequel la qualité de l'eau est maintenue tout en fixant des limites de fonctionnement importantes, mais globalement moins contraignantes que dans le premier mode de traitement, un troisième mode de traitement moyen, ou mode d'usage normal, dans lequel la piscine est normalement utilisée, et/ou un quatrième mode de traitement choc, dans lequel l'injection de produits de traitement forts est autorisée et qui ne comprend pas d'autres limites de fonctionnement que celles imposées par les caractéristiques propres à chaque actionneur et/ou les limites normatives sur les concentrations autorisées de produits ;
- des alarmes si des données comme des mesures sortent de plages prédéfinies, par exemple quand la qualité de l'eau est dégradée.

La seconde étape E2 de formatage des données à afficher peut également comprendre l'organisation de différents fichiers créés à partir des données à afficher par exemple selon l'une des normes FAT ou FAT32 ou NTFS, etc. Cette organisation permet de hiérarchiser les données à afficher dans un système de fichier de nature arborescente. Chaque fichier peut être par exemple un fichier de type image statique, ou vidéo, ou un fichier sonore de format universel. Le choix de cette organisation des fichiers est fait pour obtenir finalement une structure de fichiers compatible à un stockage sur un support tel qu'une clé USB. Naturellement, l'invention ne se limite pas à un standard particulier d'organisation de fichiers, ni à une connectique particulière d'une clé de type USB. Cette étape d'organisation peut également être réalisée par le module de communication ou par un élément de mise en forme extérieur au module de communication.

La troisième étape E3 comprend un transfert des données formatées à l'étape précédente vers un afficheur, celui-ci disposant par exemple par d'un port de communication de type USB, notamment par l'intermédiaire d'une simple clé USB agissant comme élément de transfert entre le module de communication et l'afficheur. La troisième étape E3 comprend également une présentation des données formatées. Ainsi, un cadre photo peut permettre d'afficher un diaporama de plusieurs images générées par le système de gestion de la piscine, comprenant des données complémentaires sur la piscine. Un téléviseur offre aussi la possibilité à un utilisateur de visualiser ce même diaporama. Un boîtier Internet de type boxADSL permet la disponibilité de ces données sur un réseau local d'un utilisateur. Cette possibilité de présentation des données offre une mise à disposition simple et efficace des données liées au système de gestion. Un utilisateur ou gestionnaire peut exploiter cette présentation des données pour repérer sur place un défaut ou un dysfonctionnement du système et intervenir immédiatement, par exemple pour modifier un paramètre ou remettre à niveau un stock de produit d'entretien.

Naturellement, le concept de l'invention a été exposé précédemment à titre d'exemple dans le cadre d'un système de gestion d'une piscine, mais peut être mis en oeuvre dans tout autre contexte, associé à tout autre système comprenant des moyens logiciel et éventuellement matériel, plus particulièrement comprenant un système de gestion, par exemple dans le cadre d'un réseau d'équipements domotiques tels que des actionneurs électromécaniques pilotant des ouvrants du bâtiment. La solution permet de faciliter la communication de données numériques, en exploitant toute interface homme machine spécifique et/ou un écran, sans que ceux-ci ne soient dédiés en particulier au système de gestion. Le système de gestion équipé ou non de son propre écran, devient compatible avec un écran standard qui n'est pas son périphérique primaire d'affichage. Cette approche permet de profiter du fait que beaucoup d'afficheurs comprennent des ports USB pour obtenir en entrée des données à afficher. En résultat, elle facilite et standardise la communication de données de tout système de gestion, permet la réduction du coût d'un système de gestion puisque son dispositif de communication peut être simplifié, tout en permettant sa communication conviviale vers un utilisateur.

## Revendications

1. Procédé de communication de données, notamment de données d'un système de gestion d'une piscine ou d'un système de gestion d'un réseau domotique, **caractérisé en ce qu'**il comprend les étapes suivantes :
- (E1) : collecte de données à afficher par un module de communication (8) ;
- (E2) : formatage des données à afficher consistant à créer au moins un fichier de type image statique, ou vidéo, ou un fichier sonore, dans un format universel, contenant les données à afficher ;
- (E3) : transfert des données formatées vers un afficheur (20).

2. Procédé de communication d'un système de gestion selon la revendication précédente, **caractérisé en ce que** la seconde étape (E2) de formatage des données à afficher consiste à organiser les données sous la forme de plusieurs fichiers de données, selon une organisation de type clé USB.

3. Procédé de communication d'un système de gestion selon l'une des revendications précédentes, **caractérisé en ce que** la première étape (E1) de collecte de données à afficher comprend une transmission des données à afficher vers un module de communication (8) qui met en oeuvre la seconde et/ou la troisième étapes (E2, E3).

4. Procédé de communication d'un système de gestion selon l'une des revendications précédentes, **caractérisé en ce que** la troisième étape comprend une liaison du module de communication (8) sur un port USB d'un afficheur (20).

5. Procédé de communication d'un système de gestion selon l'une des revendications précédentes, **caractérisé en ce que** les données à afficher comprennent tout ou partie des données suivantes :
- un identifiant de la piscine ;
- la mesure de la température de l'eau et/ou de l'air ;
- la mesure du pH de l'eau ;
- la mesure du potentiel RedOx (d'oxydo-réduction) ;
- la mesure du Chlore ou produit équivalent, dont la fonction est le traitement de l'eau ;
- des valeurs de consignes et/ou valeurs maximales et/ou valeurs minimales de grandeurs représentant la qualité de l'eau comme le pH, le chlore ou sel ou brome ou ozone ou oxygène actif ou niveau de production d'UV, de désinfectant par électrolyse comme la production de chlore par électrolyse au sel, du système de gestion de la piscine ;
- les valeurs de plages horaires de ces valeurs de consigne et/ou valeurs maximales et/ou valeurs minimales de grandeurs représentant la qualité de l'eau ;
- les plages de filtration de l'eau de la piscine du système de gestion de la piscine ;
- les ajouts de produits traitants dans l'eau de la piscine ou dans un réservoir adapté ;
- le mode de fonctionnement du système de gestion de la piscine, parmi par exemple un premier mode d'hivernage, dans lequel les paramètres de fonctionnement des actionneurs sont très largement limités, certains actionneurs pouvant être totalement désactivés, un deuxième mode de traitement réduit, ou mode d'usage économique, dans lequel la qualité de l'eau est maintenue tout en fixant des limites de fonctionnement importantes, mais globalement moins contraignantes que dans le premier mode de traitement, un troisième mode de traitement moyen, ou mode d'usage normal, dans lequel la piscine est normalement utilisée, et/ou un quatrième mode de traitement choc, dans lequel l'injection de produits de traitement forts est autorisée et qui ne comprend pas d'autres limites de fonctionnement que celles imposées par les caractéristiques propres à chaque actionneur et/ou les limites normatives sur les concentrations autorisées de produits ;
- des alarmes si des données comme des mesures sortent de plages prédéfinies, par exemple quand la qualité de l'eau est dégradée.

6. Système de gestion, notamment d'une piscine ou d'un réseau domotique **caractérisé en ce qu'**il comprend un module de communication (8) comprenant un calculateur pour formater des données à afficher et une connectique de type USB, ce module de communication (8) mettant en oeuvre le procédé de communication selon l'une des revendications précédentes.

7. Système de gestion selon la revendication précédente, **caractérisé en ce qu'**il comprend un dispositif de communication sans contact pour collecter en entrée des données à afficher.

8. Système de gestion (1) d'une piscine, **caractérisé en ce qu'**il comprend un système de gestion selon la revendication 6 ou 7.

9. Système de gestion d'une piscine selon la revendication précédente **caractérisé en ce qu'**il comprend des capteurs (2) de mesure de grandeurs caractéristiques de la qualité de l'eau d'une piscine, une unité centrale (10) qui régule la qualité de l'eau d'une piscine, des actionneurs (4, 5, 6, 7) commandés par l'unité centrale (10) pour agir sur la qualité de l'eau de la piscine, un moyen de transmission de données à afficher, relatives aux capteurs, à l'unité centrale ou aux actionneurs, vers un module de communication (8).

10. Système de communication comprenant au moins un afficheur (20) équipé d'un port d'entrée USB pour recevoir des données à afficher, **caractérisé en ce qu'**il comprend un système de gestion selon la revendication 6 ou 7.
